# EUROPÄISCHE PATENTSCHRIFT

(11) **EP 1 423 253 B1**
(45) Veröffentlichungstag und Bekanntmachung des Hinweises auf die Patenterteilung: **12.04.2006**
(21) Anmeldenummer: 02767059.5
(22) Anmeldetag: 30.07.2002
(51) Int. Cl.: B29C 49/42

(54) **STRECKBLASMASCHINE ZUR HERSTELLUNG VON BEHÄLTERN**
STRETCH BLOW MOLDING MACHINE FOR PRODUCING RECEPTACLES
MACHINE POUR LA FABRICATION DE RÉCIPIENTS PAR MOULAGE AVEC ETIRAGE-GONFLAGE

(30) Priorität: 17.08.2001 DE 10140447
(43) Veröffentlichungstag der Anmeldung: 02.06.2004
(73) Patentinhaber: BEKUM Maschinenfabriken GmbH, D-12107 Berlin (DE)
(72) Erfinder: LEHMANN, Wilfried, 14199 Berlin (DE); ANDERL, Johann, 71640 Ludwigsburg (DE)
(74) Vertreter: Flosdorff, Jürgen
(86) Internationale Anmeldenummer: PCT/DE2002/002767
(87) Internationale Veröffentlichungsnummer: WO 2003/018293

(56) Entgegenhaltungen:
- US-A- 3 339 230
- US-A- 5 718 853
- US-A- 5 876 768
- US-A- 5 980 229

## Beschreibung

Die Erfindung betrifft ein Reheat-Blasmaschinensystem, bei dem Vorformlinge in vorzugsweise zwei parallel angeordneten Heizlinien gezielt erwärmt, danach einem ortsfesten Formensystem zugeführt und dort zu Hohlkörpern verblasen werden.

Maschinen dieser Art werden technisch den sogenannten Linearsystemen zugeordnet. Im Gegensatz hierzu stehen Rundläufersysteme, bei denen die gesamten Formensysteme während der Zuführung der Vorformlinge, des Blasens und der Hohlkörperabfuhr auf einer kreisförmigen Bahn bewegt werden.

Die bisher üblichen Linearsysteme, die z.B. in der DE 30 08 219 A1 und der DE 42 12 248 A1 beschrieben sind und auf die hinsichtlich einzelner konstruktiver Bestandteile hiermit ausdrücklich hingewiesen wird, ermöglichen eine exakte Aufheizung der Vorformlinge, jedoch ist durch die Anzahl der Heizlinien dieser bekannten Systeme auch die Anzahl von Kavitäten in einer Schließeinheit festgelegt. Um den Ausstoß zu erhöhen, sind bereits Anlagen mit sechs oder acht Heizlinien aufgebaut worden, wobei die zugehörige Schließeinheit sechs oder acht Kavitäten hat, die dann eine entsprechend große Schließkraft haben muß.

Eine größere Schließkraft bedeutet aber mehr Gewicht in einer Schließeinheit, wodurch wiederum die in der Praxis machbare Arbeitsgeschwindigkeit stark verringert wird.

US-A-5,876,768 offenbart eine Streckblasmaschine, bei der das Ofensystem drei nebeneinander liegende lineare Ofenlinien aufweist. An dem Ende des Ofensystems werden jeweils drei nebeneinander liegende Vorformlingsträger durch ein Linearschubsystem in die unmittelbar neben dem Ende des Ofensystems angeordneten Blasformen geschoben, von deren Ausgang eine Transportlinie zum Eingang des Ofensystems zurückführt. Auch auf dieser zurückführenden Transportlinie erfolgt das taktweise Vorrücken der Vorformlingsträger durch das Linearschubsystem.

US-A-5,715,853 offenbart eine Blasmaschine mit einem langgestreckten Temperaturvorkonditionierungsbereich, den die Vorformlinge auf einem Förderband durchlaufen und dabei einer Luftströmung ausgesetzt werden, so daß die Wärmeenergie aller Vorformlinge gleich groß ist und die Wärmeverteilung gleichförmig wird. Von dem Vorkonditionierungsbereich werden die Vorformlinge in ein Ofensystem transportiert, das sie auf in Längsrichtung angeordneten Vorformlingsträgern durchlaufen, die dabei voneinander beabstandet sind. An das Ofensystem schließt sich eine Temperaturausgleichsstrecke an, bevor die Vorformlinge auf einer linearen Bahn in dem Blasformbereich gelangen. Dabei ist der Blasformbereich entlang einer geradlinigen Transportlinie, auf der die Vorformlingsträger von dem Ofensystem in die Schließeinheit transportiert werden, angeordnet.

Der vorliegenden Erfindung liegt die Aufgabe zugrunde, eine Streckblasmaschine des Linearsystems zu entwickeln, die einen erheblich höheren Ausstoß ermöglicht, ohne zwangsläufig die Anzahl der Heizlinien und der Kavitäten je Form zu erhöhen.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, daß das Transportsystem der Streckblasmaschine ein Linearschubsystem, das die Vorformlingsträgereinheiten taktweise durch das Ofensystem vorrückt, und zwei mit Drehtischen versehene Drehschubsysteme aufweist, die am Anfangs- und am Endbereich des Ofensystems angeordnet sind und entweder jeweils einen eigenen oder einen gemeinsamen Antrieb aufweisen und über ein zusätzliches Kurzhubsystem verfügen können. Das am Endbereich des Ofensystems angeordnete erste Drehschubsystem nimmt je Zyklus eine Gruppe von n (1 = 1,2,3,4,5...) einzelne Vorformlingsträger nacheinander oder als Gruppe gemeinsam auf und fixiert diese, um diese anschließend als Vorformlingsträgergruppe gemeinsam auf einer oder auf einer von zwei vorzugsweise im wesentlichen parallel zur Ofenlinie angeordneten Längstransportlinien derart vorzuschieben, daß jede Vorformlingsträgergruppe gemeinsam in der zugeordneten Schließeinheitengruppe, die aus n (n =1,2,3,4,5...) bevorzugt gleichen Schließeinheiten besteht, eintrifft und hier zur Durchführung des Streckblasprozesses verweilt. Das zweite Drehschubsystem schiebt die Vorformlingsträger einzeln taktweise zum Eingangsbereich des Ofensystems vor, wo sie das Linearschubsystem wieder taktweise in das Ofensystem einführt.

Die erfindungsgemäße Streckblasmaschine ermöglicht durch die Kombination des Linearschubsystems mit den beiden Drehschubsystemen mit einem verhältnismäßig geringen konstruktiven Aufwand einen erheblich höheren Ausstoß, wobei die zugehörigen Transportlinien eine besonders schnelle Bewegung der Vorforlingsträgereinheiten auf kürzester Linie mit einem minimalen Zeitaufwand ermöglichen. Das Transportsystem ist zudem einfach aufgebaut, so daß die erfindungsgemäße Streckblasmaschine kostengünstig herstellbar ist. Da alle Vorformlinge auf ihren Vorformlingsträgern bis zum Erreichen der Schließeinheiten in gleich langen Zeitspannen die Heizstrecke mit ihren Heizeinrichtungen sowie die Temperaturausgleichsstrecke miteinander durchlaufen haben und somit die "gleiche Lebensgeschichte" aufweisen, sind die besten Voraussetzungen für die Herstellung von Behältern hoher Qualität gegeben.

Weiter ist erfindungsgemäß vorgesehen, daß das Ofensystem eine lineare Ofenschiene aufweist, auf der die Vorformlingsträger quer angeordnet und mit ihren Längsseiten aneinander anliegend vorgeschoben werden. Um eine glatte Führung auf der Ofenschiene zu gewährleisten, kann die Ofenschiene einen mittigen, nach oben überstehenden längsgerichteten Leistenabschnitt haben, der in eine mittige Nut der Vorformlingsträger im wesentlichen ohne seitliches Spiel eingreift.

Weiter wird vorgeschlagen, daß die Drehtischsysteme unterhalb der Ofenschiene angeordnet sind und vertikal bewegbare Indexbolzen haben, die bevorzugt durch pneumatische Kolben/Zylinderanordnungen nach oben ausfahrbar sind, um in eine mittige Aussparung der Vorformlingsträgerplatte einzugreifen, so daß diese auf dem Drehtisch bzw. dem Dreheinschub fixiert sind.

Bei einer erfindungsgemäßen Streckblasmaschine in Einseitenausführung wirken die beiden Drehtischsysteme mit einer Längstransportlinie zusammen, die im wesentlichen parallel zu der Ofenlinie verläuft. Bei einer erfindungsgemäßen Streckblasmaschine in Zweiseitenausführung sind zwei derartige Längstransportlinien vorgesehen. Weiter wird vorgeschlagen, daß die Längstransportlinie bzw. Längstransportlinien durch Längstransportschienen gebildet sind, auf denen die Vorformlingsträger in ihrer Längsrichtung angeordnet und mit ihren Schmalseiten aneinander anliegend vorgeschoben werden. Zur glatten Führung der Vorformlingsträger ist vorgesehen, daß die Längstransportschienen seitliche Führungswände haben, die die Längsseiten der Vorformlingsträger übergreifen, um deren Abheben zu verhindern.

Mit besonderem Vorteil ist vorgesehen, daß die Drehschubsysteme so ausgeführt sind, daß ihr Drehtisch bzw. ihre Transportplatte entweder direkt vom Läufer eines Antriebsmotors, ohne ein zwischengeschaltetes Getriebe, angetrieben wird oder beide Drehtische gemeinsam von einem einzigen Zentralantrieb bewegt werden. Im erstgenannten Fall wird als Antriebsmotor zweckmäßigerweise ein Drehmomentmotor eingesetzt.

Weiter wird vorgeschlagen, daß entlang der Längstransportlinie/Längstransportlinien in Transportrichtung im Anschluß an die Schließeinheitengruppe eine Behälterentnahmeeinrichtung angeordnet ist, auf die eine Vorformüngszuführeinrichtung folgt.

Das Ofensystem besteht vorzugsweise aus zwei parallel angeordneten, voneinander unabhängig anzusteuernden Ofenlinien, die jeweils mit eigenen Heiz- und Temperaturausgleichsstrecken ausgestattet sind. Die Vorformlingsträger werden vorzugsweise mit zwei Vorformlingen bestückt, ohne daß die Erfindung hierauf beschränkt ist.

Das erfindungsgemäße Verfahren sieht vor, daß jede aus n (n=1,2,3,3,4,5...) Vorformlingsträgern bestehende Vorformüngsträgergruppe gemeinsam in die aus n Schließeinheiten bestehende Schließeinheitengruppe transportiert wird, wobei beide Drehschubsysteme eine Rotationsbewegung um den gleichen Drehwinkel synchron ausführen. Dabei schiebt das am Endbereich des Ofensystems angeordnete Drehschubsystem die auf der zugeordneten Längstransportlinie aufgereihten Vorformlingsträger um n Vorformlingsträgerpositionen bevorzugt in einem Schnellhub vor, wobei gleichzeitig das zweite Drehschubsystem die letzten n Vorformlingsträger auf der Längstransportlinie vorschiebt und dabei den vordersten Vorformlingsträger so am Eingang des Ofensystems positioniert, daß dieser von dem Linearschubsystem anschließend auf die Ofenschiene geschoben werden kann, wobei am Ende der Ofenstrecke zeitgleich ein Vorformlingsträger auf den ersten Drehtisch vorgerückt wird.

Dies bedeutet, daß zwischen den einzelnen Schüben, mit denen die Vorformlingsträger durch das Ofensystem getaktet werden, jeweils ein Vorformlingsträger von dem zweiten Drehschubsystem dem Eingang des Ofensystems zugeführt wird, während gleichzeitig das erste Drehschubsystem einen Vorformlingsträger vom Ausgang des Ofensystems wegtaktet, bis auf dem ersten Drehschubsystem n Vorformlingsträger aneinander gereiht sind, die dann in einem Schnellhub zur Längstransportlinie bzw. auf der Längstransportlinie vorgeschoben werden.

Weiter wird vorgeschlagen, daß die Bewegungen der Schließeinheiten, die entlang einer Längstransportlinie angeordnet sind, gleichzeitig erfolgen. Die Reck- und Blasprozesse können in jeder einzelnen Schließeinheit dabei unabhängig und unterschiedlich von den anderen individuell gesteuert werden.

Mit der erfindungsgemäßen Streckblasmaschine wird ein Baukastensystem vorgeschlagen, bei dem unter Beibehaltung der Grundkomponenten des herkömmlichen Linearsystems der Ausstoß signifikant erhöht werden kann. Dabei ist die Heizung vorzugsweise auf zwei Linien begrenzt, wobei vorgesehen ist, daß die je Längstransportlinie n-fach verwendete Basisschließeinheit vorzugsweise zwei Kavitäten aufweist, so daß die zugehörige Schließkraft verhältnismäßig klein ist. Alle Vorforlinge im Prozeß haben die gleiche "Lebensgeschichte" d.h. sie sind exakt gleich lang durch die Heizzone und die Temperaturausgleichsstrecke bewegt worden. Es gibt keine Beschränkung der Ausstoßanzahl durch unterschiedliche Flaschenvolumina oder Geometrien und das erfindungsgemäße System ermöglicht problemlos die Herstellung von Weithalsbehältern und von flachovalen Flaschen mit Preferential-Heating. Die Anlage ist auch für die Verarbeitung von Polypropylen geeignet.

Die erfindungsgemäße Streckblasmaschine hat minimale Totzeiten bei einem hohen verbleibenden Arbeitsanteil und eine hohe Ausstoßflexibilität trotz festgeschriebener Kavitätszahl und dadurch begrenzte Schließkräfte. Das erfindungsgemäße System ist weit effizienter als die bisher bekannten Systeme dieser Art.

Weitere Einzelheiten der Erfindung ergeben sich aus der nachfolgenden Beschreibung sowie anhand der Zeichnung. Dabei zeigen:
- Fig. 1A bis 1M: zwölf aufeinanderfolgende Arbeitsgänge eines Zyklus einer als Zweiseitenmaschine ausgeführten Streckblasmaschine mit jeweils drei Schließeinheiten;
- Fig. 2: eine schematische Aufsicht auf eine Streckblasmaschine in Einseitenausführung am Beispiel der Version mit n = 3 Schließeinheiten;
- Fig. 3: eine perspektivische Ansicht eines Vorformlingsträgers in einer Version für zwei Vorformlingsaufnahmen;
- Fig. 4: eine Seitenansicht, die die Fixierung der Vorformlingsträger auf einer Drehtischplatte zeigt und
- Fig. 5: eine schematische Aufsicht auf eine erfindungsgemäße Streckblasmaschine in Zweiseitenausführung am Beispiel der Version mit 2 x n = 3 Schließeinheiten.

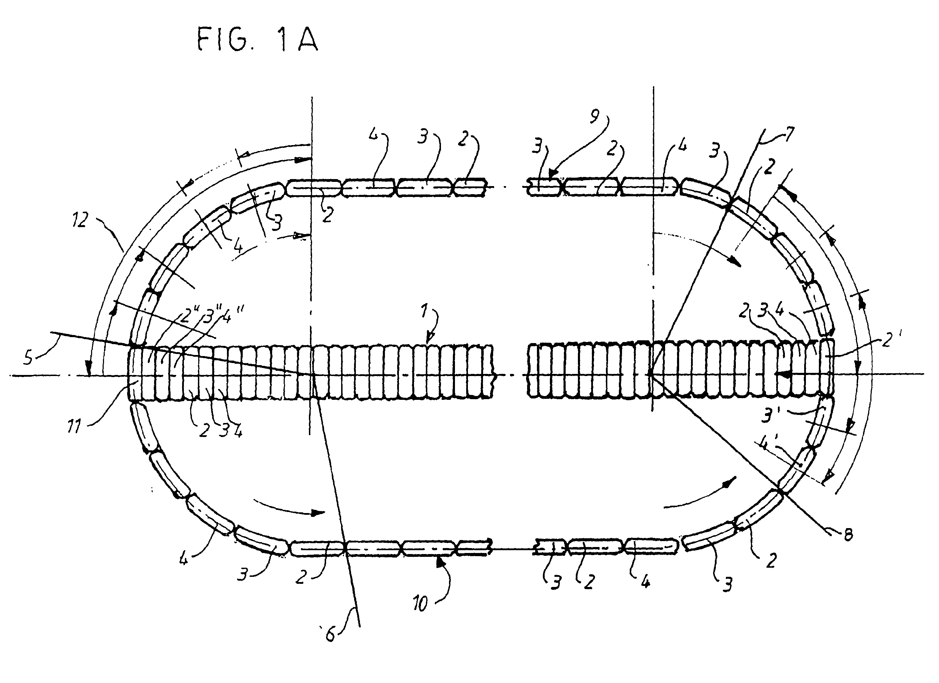

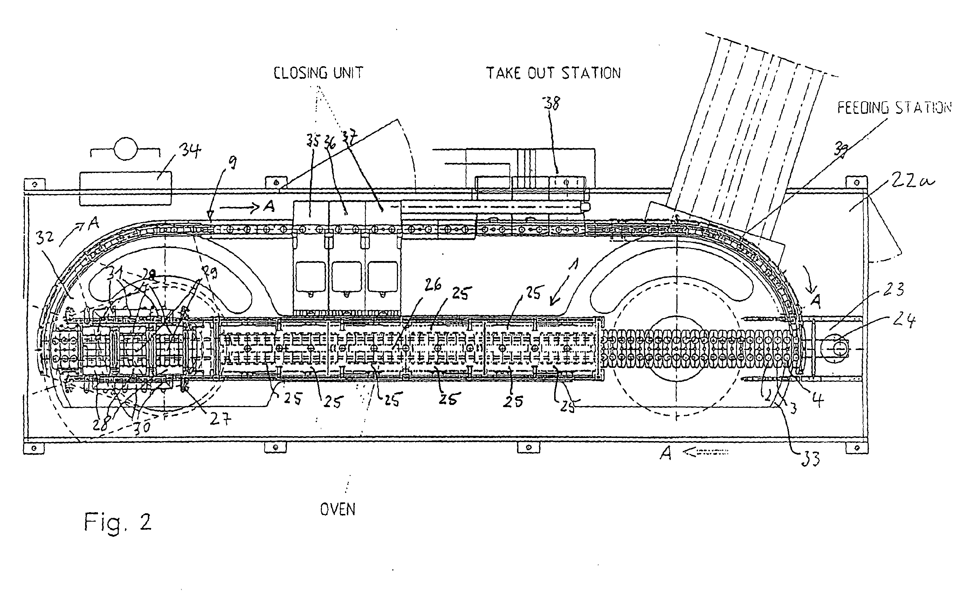

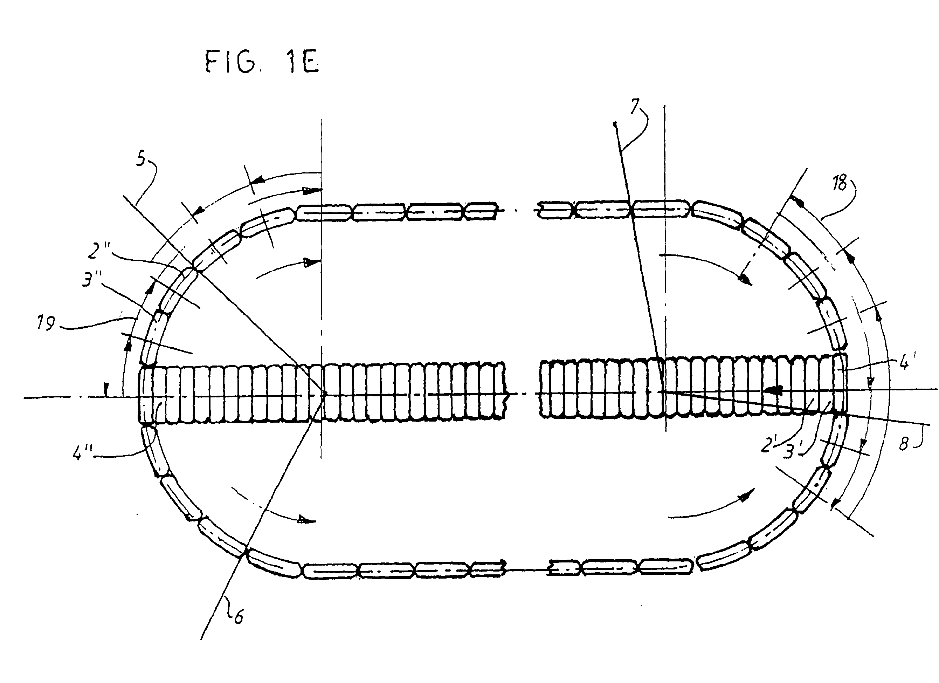

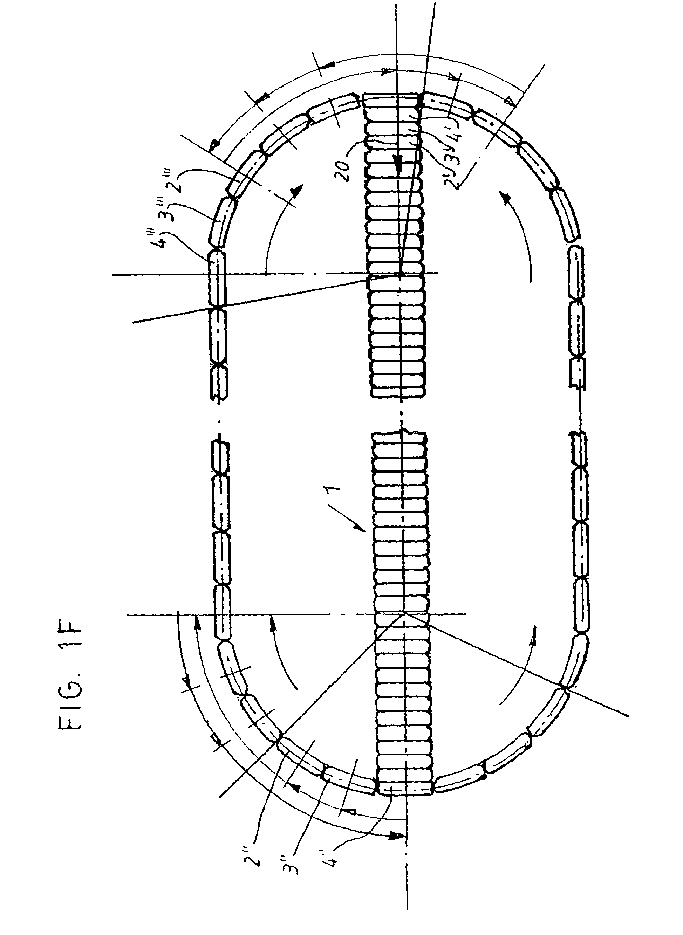

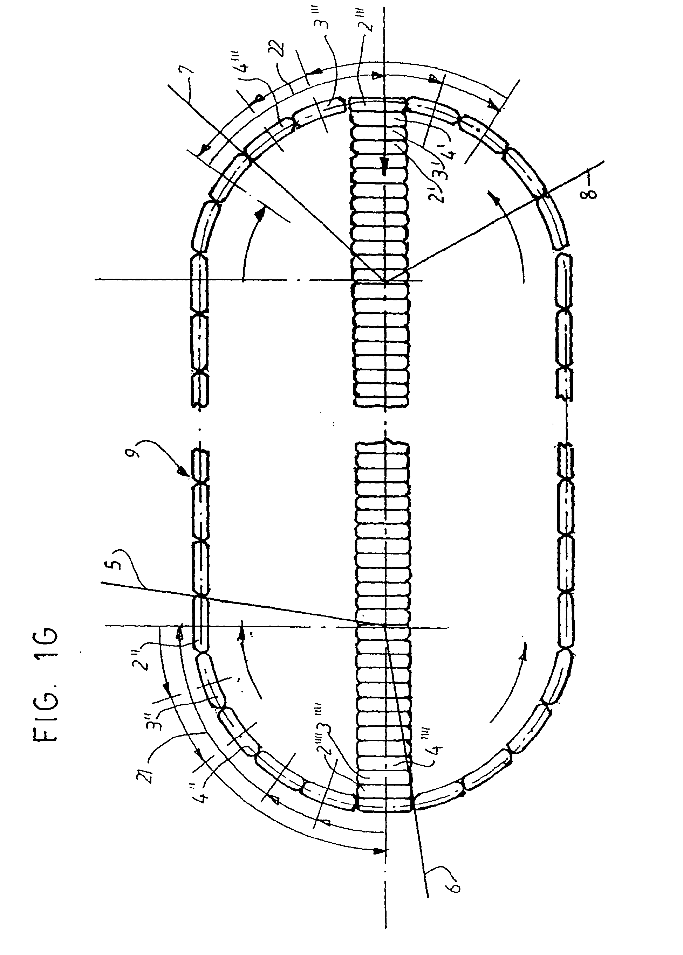

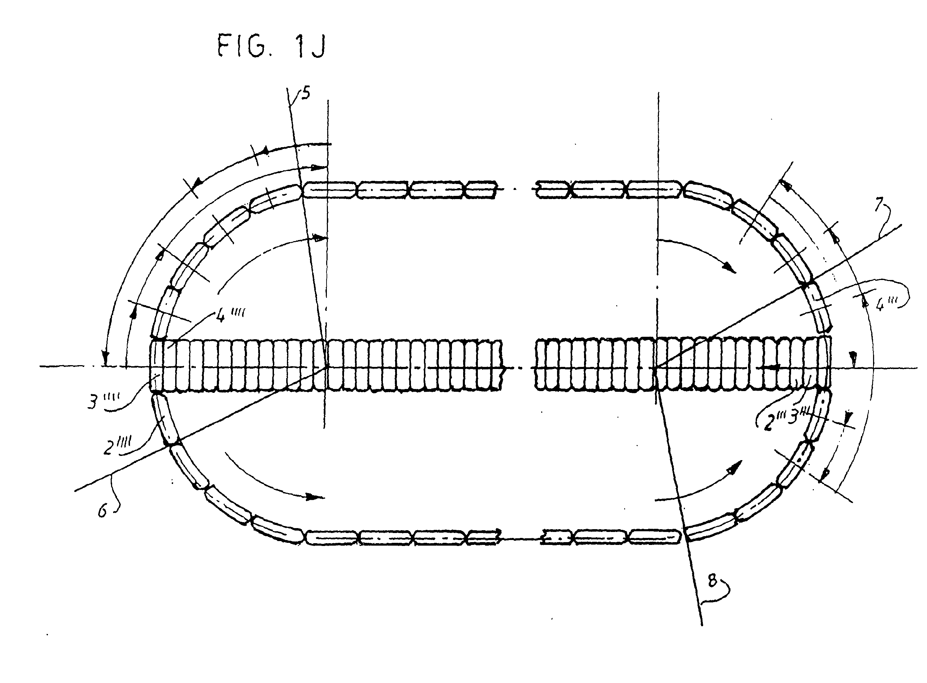

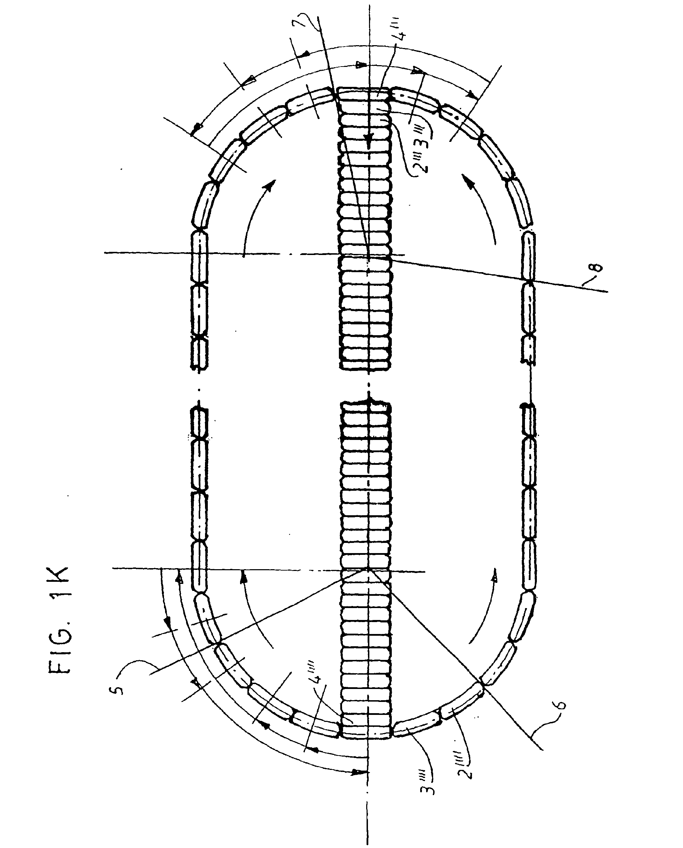

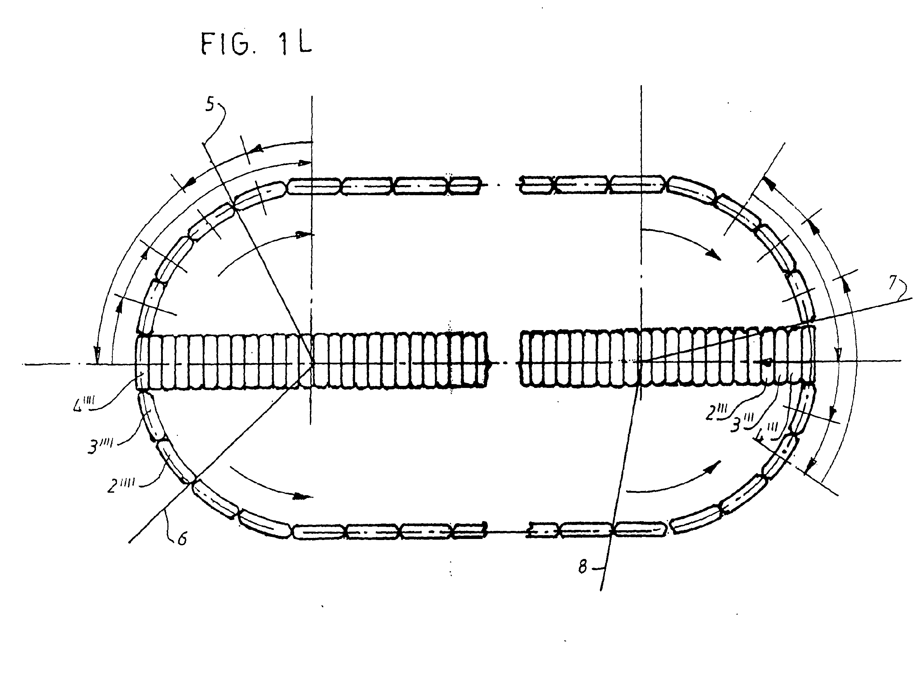

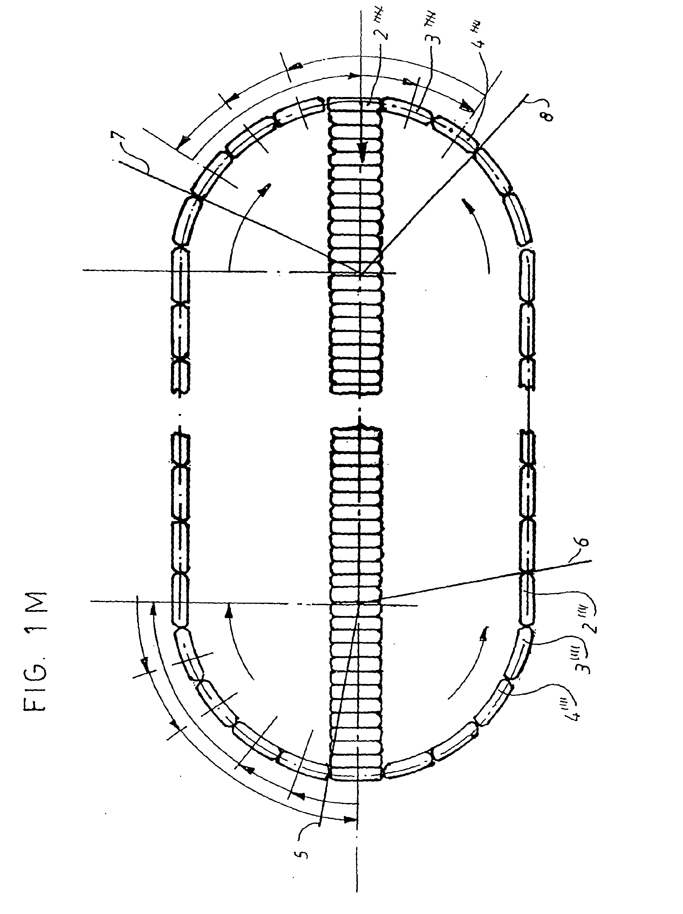

Die Figuren 1A bis 1M zeigen zwölf aufeinanderfolgende Arbeitsschritte eines vollständigen Zyklus einer Streckblasmaschine in Zweiseitenausführung mit zwei Schließeinheitengruppen, die jeweils n = 3 Schließeinheiten enthalten.

In der Mitte der schematischen Darstellung befindet sich die lineare Ofenstrecke 1, auf der Vorformlingsträgergruppen mit ihren Breitseiten aneinandergereiht angeordnet sind, die jeweils aus Vorformlingsträgern 2, 3 und 4 bestehen.

Am linken Endbereich der Ofenlinie 1 befindet sich das erste Drehschubsystem, dessen jeweilige Winkellage durch die Begrenzungslinien 5, 6 dargestellt ist. Am rechten Anfangsbereich der Ofenlinie 1 befindet sich das zweite Drehschubsystem, dessen jeweilige Winkellage durch die Begrenzungslinien 7 und 8 angedeutet ist. Zu beiden Seiten der Ofenlinie 1 verlaufen Längstransportlinien 9 und 10, die - gemeinsam mit den zugehörigen Drehschubsystemen- vom Ausgang der Ofenlinie 1 aus einen 90°-Bogen beschreiben, um von dort parallel zur Ofenlinie 1 zu verlaufen und in einem weiteren 90°-Bogen zum (rechten) Anfang der Ofenlinie 1 zurückzuführen.

Auf der Ofenlinie 1 sind die Vorformüngsträger 2,3,4 in Querrichtung angeordnet, d.h. sie liegen mit ihren Längsseiten aneinander an, während sie auf den Längstransportlinien 9 und 10 in Längsrichtung angeordnet sind, d.h. mit den Schmalseiten aneinander anliegen.

In dem in Fig. 1A dargestellten Ausgangszustand ist die unmittelbar dem Ausgang der Ofenlinie nachgelagerte Position 11 leer, ebenso wie die beiden benachbarten Positionen der Längstransportlinie 9 und der Längstransportlinie 10. Der dargestellte Zustand wurde dadurch erreicht, daß das linke Drehschubsystem einen Schnellhub im Gegenuhrzeigersinn ausführte, der in der Figur durch den Pfeil 12 angezeigt ist. Hierdurch wurden auf der Längstransportlinie 10 die Vorformlingsträgergruppen um 3 Positionen vorgeschoben.

Gleichzeitig führte das rechte Drehschubsystem einen Schnellhub im Gegenuhrzeigersinn aus, der durch den Pfeil 13 angezeigt ist. Hierdurch wurde die vorderste Vorformlingsträgergruppe um drei Positionen vorwärts bewegt, wodurch der erste Vorformlingsträger 2' der vordersten Trägergruppe in eine Position gebracht ist, in der dieser mit der Ofenlinie 1 fluchtet.

Durch den vorangegangenen Schnellhub wurde eine neue Vorformlingsträgergruppe (bestehend aus den drei Vorformlingsträgern 2,3 und 4 an der (nicht dargestellten) Schließeinheitengruppe der Längstransportlinie 10 positioniert, die zuvor dort befindliche Vorformlingsträgergruppe mit den weiteren Vorformlingsträgergruppen dieser Linie entsprechend vorgeschoben, so daß an der Behälterentnahmeeinrichtung die fertigen Behälter von der zugehörigen Vorformlingsträgergruppe entnommen und im Bereich der Vorformlingszuführeinrichtung die dort befindliche Vorformlingsträgergruppe erneut mit Vorformlingen bestückt werden kann.

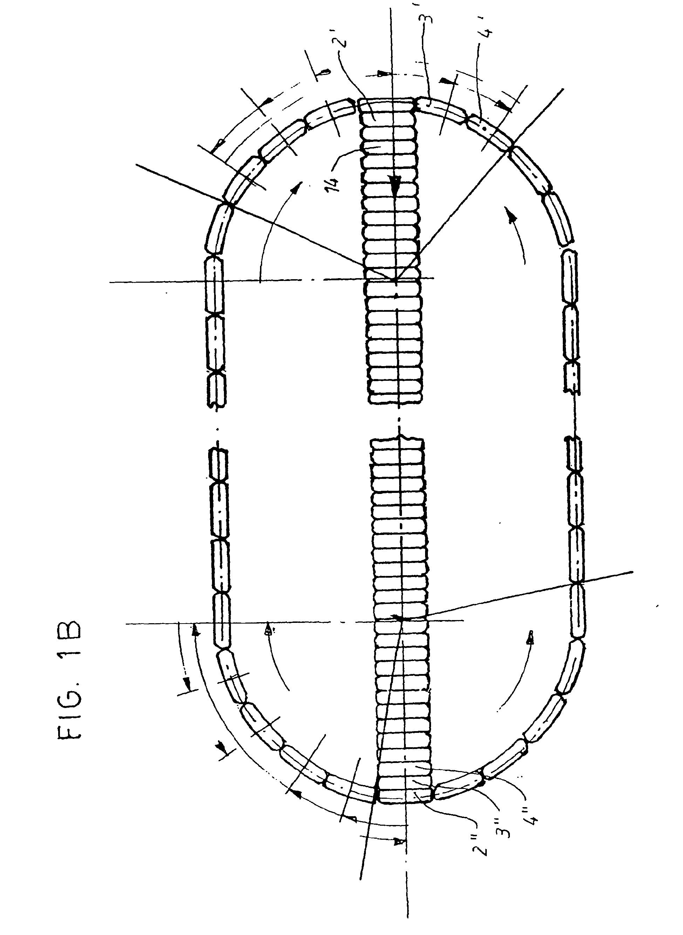

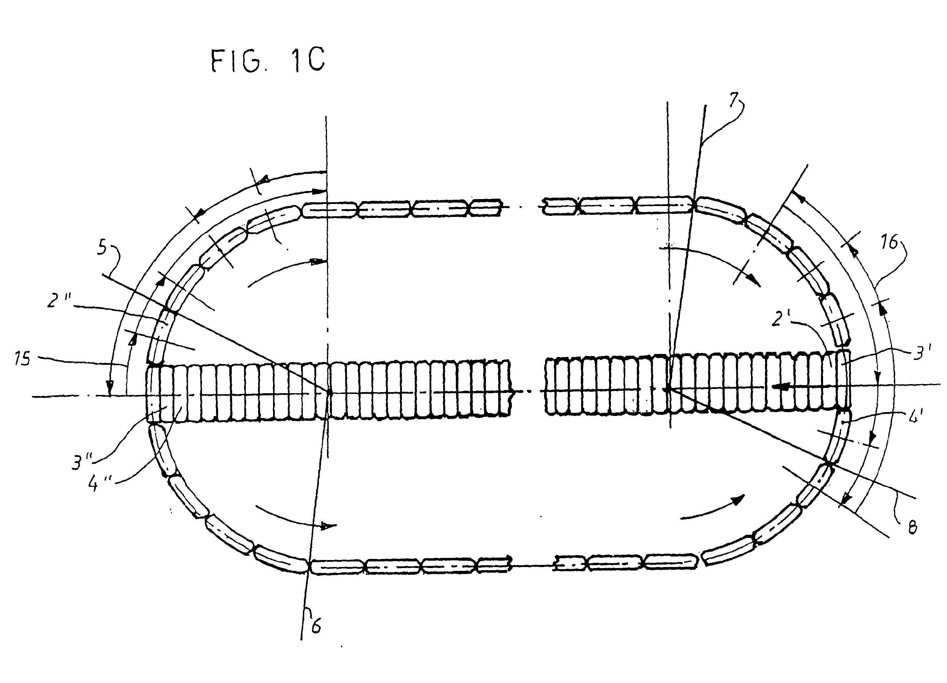

Fig. 1B zeigt den nächsten Arbeitsschritt, bei dem das dem Anfang der Ofenlinie 1 gegenüberliegende Linearschubsystem den Vorformlingsträger 2' um eine Position auf der Ofenlinie 1 vorgeschoben hat, womit auch sämtliche andere Vorformlingsträger auf der Ofenlinie um eine Position vorrücken und der vorderste Vorformlingsträger 2" von dem linken Drehschubsystem aufgenommen und darauf fixiert wird. Dieser Arbeitsgang des Linearschubsystems ist mit dem Pfeil 14 in Fig. 1B angedeutet.

Bei dem nachfolgenden Schritt (Fig. 1C) werden die beiden Drehschubsysteme gegenläufig um eine Vorformlingsträgerposition getaktet, wobei die Drehrichtung und der Bewegungsbereich durch die Pfeile 15 und 16 dargestellt ist. Hierdurch wird auf dem linken Drehschubsystem der mit der Ofenlinie 1 fluchtende Vorformlingsträgerplatz frei, während auf dem rechten Drehschubsystem der zweite Vorformlingsträger 3' der dortigen Gruppe nun mit der Ofenlinie 1 fluchtet.

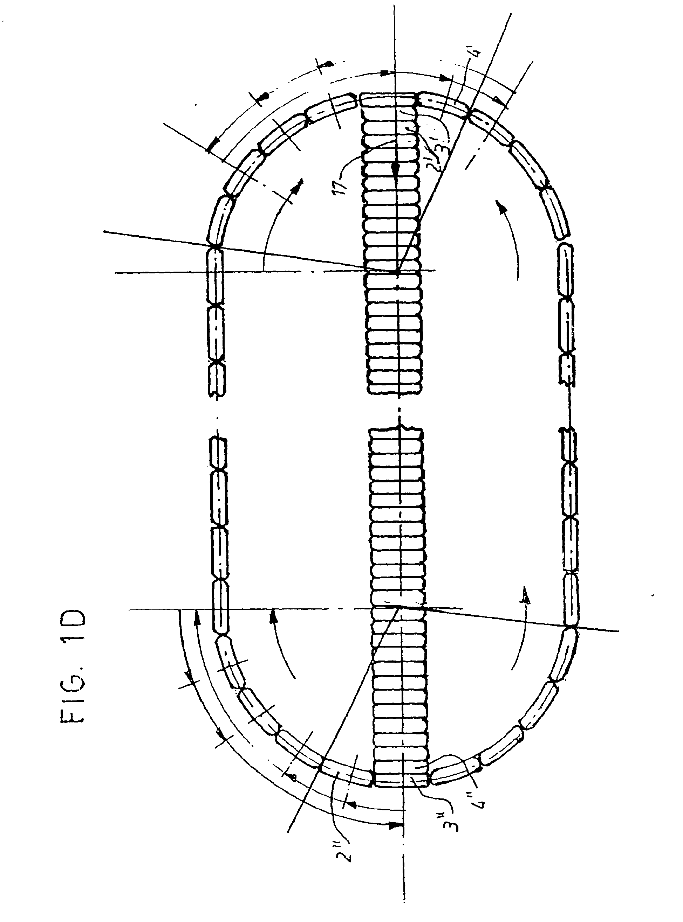

Es folgt nun (Fig. 1D) wieder ein Takt des Linearschubsystems, Pfeil 17, gefolgt von einem erneuten Drehtakt (um eine Vorformlingsträgerposition), der durch die Pfeile 18 und 19 in Fig. 1E dargestellt ist.

Nach einem weiteren Arbeitstakt des Linearschubsystems wird der in Fig. 1F dargestellte Zustand erreicht, bei dem auf dem linken Drehschubsystem alle drei Vorformlingsträger 2", 3" und 4" in Längsrichtung aneinanderliegend auf dem Drehtisch angeordnet und fixiert sind. Die Vorformlingsträgergruppe 2', 3' und 4' befindet sich auf der Ofenlinie 1, während das rechte Drehschubsystem in Folge der durchgeführten drei Drehtakte eine solche Position erreicht hat, daß eine neue Vorformlingsträgergruppe 2"', 3"' und 4"' auf dem Drehschubsystem fixiert werden kann.

Gemäß Fig. 1G führen nun die beiden Drehschubsysteme synchron einen Schnellhub um drei Vorformlingsträgerplätze im Uhrzeigersinn aus, was durch die Pfeile 21 und 22 angedeutet ist. Dadurch wird die Reihe der Vorformlingsträgergruppen auf der Längstransportlinie 9 um drei Vorformlingsträgerpositionen vorgeschoben.

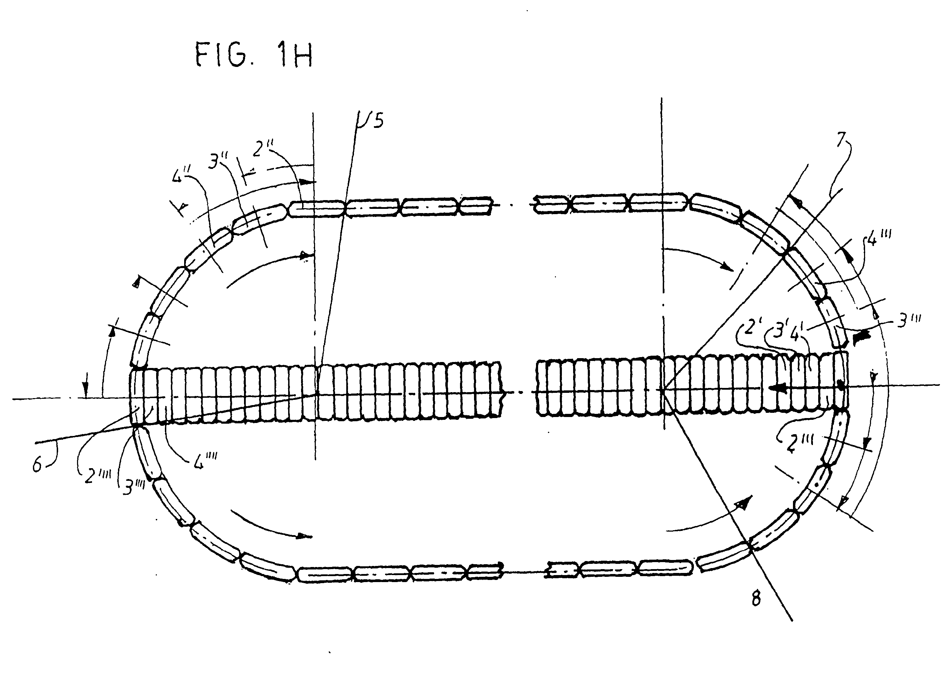

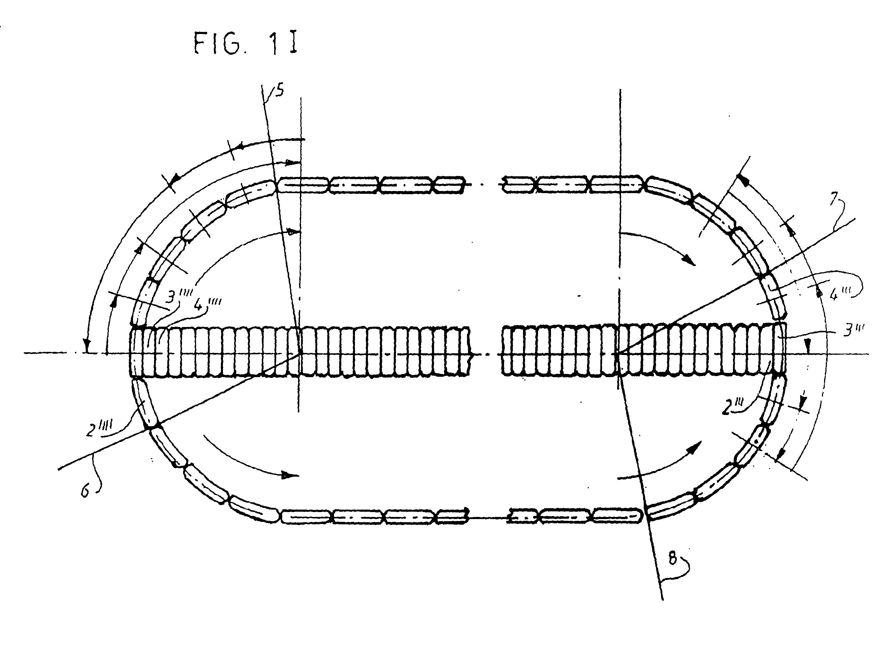

Es folgen nun die entsprechenden Arbeitsschritte, die schließlich dazu führen, daß die Vorformlingsträger um drei Positionen auf der unteren Längstransportlinie 10 vorgeschoben werden. Dies ist in den Figuren 1H bis 1M mit den entsprechenden Bezugszeichen darstellt.

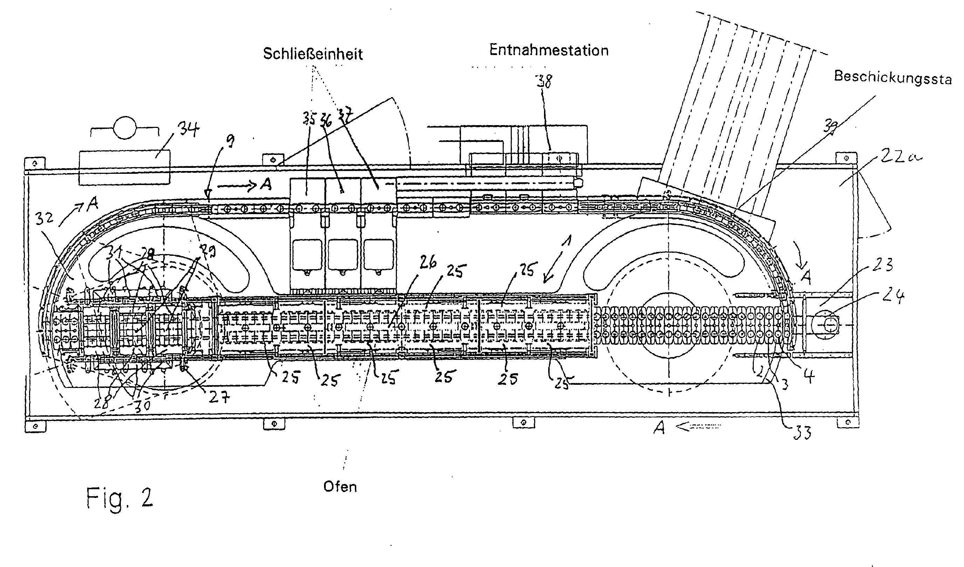

Fig. 2 zeigt nähere Einzelheiten einer erfindungsgemäßen Streckblasmaschine in Einseitenausführung. Die Maschine weist eine Maschinenplatte 22a auf, auf der im rechten Endbereich der Fig. 2 eine Lineareinschubeinheit 23 angeordnet ist, die über einen Exzenter 24 taktweise die Vorformlingsträger 2,3,4... durch die Ofenlinie 1 vorrückt.

An der Heizstrecke sind Heizpaneels 25 im Rotationsbereich der Vorformlinge für die beiden Linien angeordnet. Entlang der Längsachse der Heizstrecke ist ein durchgehender Reflektor 26 vorgesehen, der Kühlluft-geregelt ist.

Am Endbereich der Heizstrecke befinden sich Dornträgerbremsen 27, denen in Durchlaufrichtung Außenheizpaneele 28 sowie jeweils gegenüberliegend Innenheizpaneele 29 im Bereich des Preferential-Heatings folgen. An der Außenseite jedes der Heizpaneele 28 und 29 ist eine Kühlluftzuführungseinrichtung 30, 31 vorgesehen.

Am Ende der Ofenlinie 1 befindet sich der Dreheinschub 32, dem am Anfangsbereich der Ofenlinie 1 der andere Dreheinschub 33 gegenüberliegt.

Ein Bedienpult der Maschine ist mit dem Bezugszeichen 34 gekennzeichnet. In Durchlaufrichtung der Vorformlingsträger, die durch die Pfeile A angedeutet ist, sind entlang der Längstransportlinie 9 drei Schließeinheiten 35, 36 und 37 unmittelbar nebeneinander angeordnet, woraufhin im Abstand eine Flaschenentnahmeeinheit 38 und eine Vorformlingszuführeinrichtung 39 folgen.

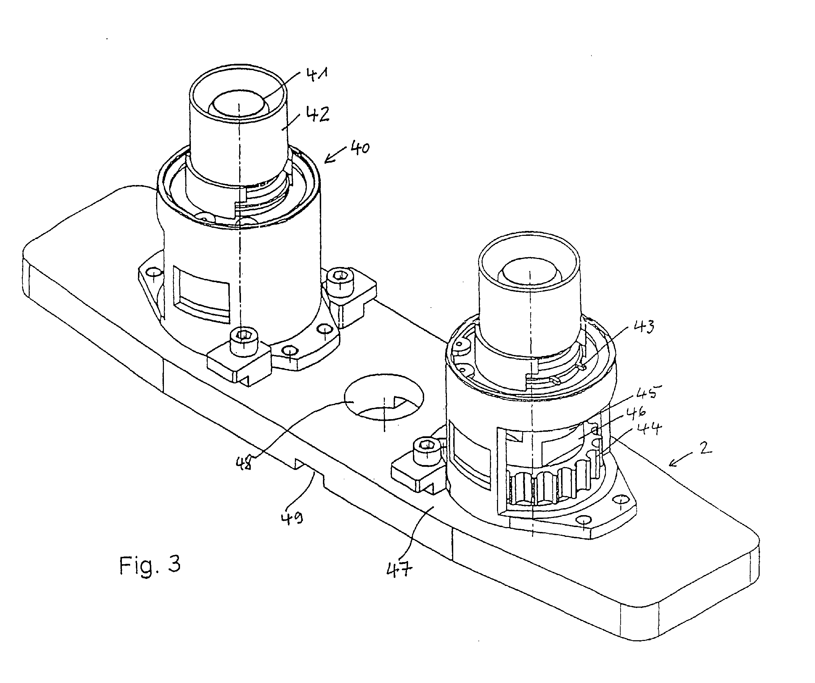

Fig. 3 zeigt in einer vergrößerten perspektivischen Ansicht einen Vorformlingsträger 2, der mit zwei Vorformlingen bestückt wird. Jede Vorformlingsaufnahmeeinrichtung 40 enthält einen Dorn 41 zur Aufnahme eines Vorformlings, wobei der Dorn 41 von einer Schutzhülse 42 umgeben ist. Zum Austausch des Dorns 41 und der Schutzhülse 42 ist eine Schnellwechseleinrichtung 43 vorgesehen. Jede Vorformlingsaufnahmeeinrichtung 40 enthält zudem einen Rotationsantrieb 44 und ein Element 45 mit Ausrichtflächen 46 für das Preferential-Heating der Vorformlinge.

Die Trägerplatte 47 des Vorformlingsträgers 2 enthält eine mittige Zentrierbohrung 48, die mit einem in Fig. 3 dargestellten Arretierbolzen des Dreheinschubs zusammenwirkt, sowie eine mittige, quer verlaufende Führungsnut 49, in die eine in Längsrichtung verlaufende Leiste der Ofenschiene zum glatten Führen der Vorformlingsträger eingreift.

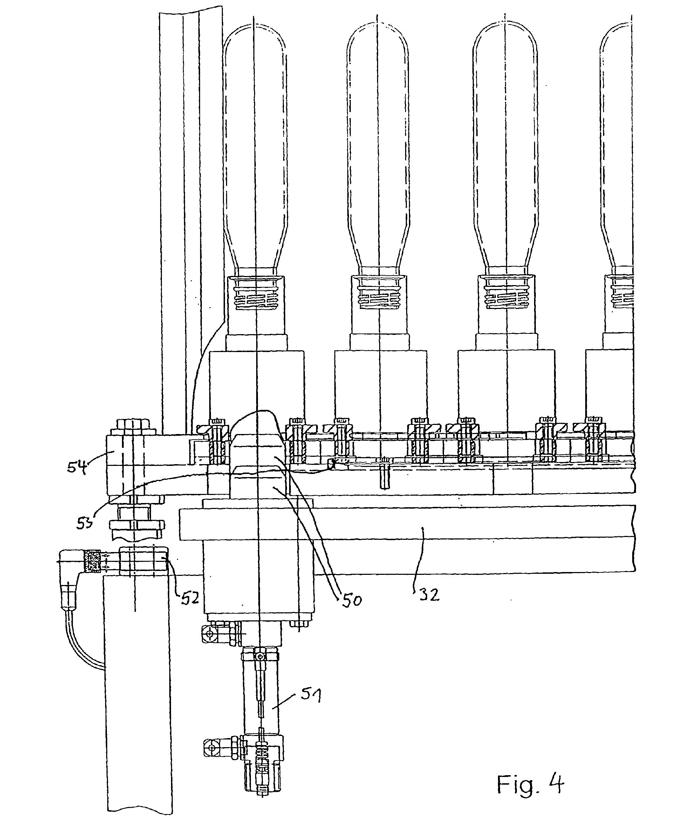

Fig. 4 zeigt, daß der Dreheinschub 32 (ebenso wie der Dreheinschub 33), die oben erwähnten Arretierbolzen 50 enthält, von denen einer sowohl in der oberen, aktiven Stellung abgebildet ist, in der der Arretierbolzen in die Zentrierbohrung 48 eines Vorformlingsträgers eingreift, als auch in der unteren, deaktiven Stellung, in der er keinen Vorformlingsträger fixiert. Zur Betätigung der Arretierbolzen 50 ist im Bereich jedes Dreheinschubs 32 bzw. 33 ein pneumatisches Arretiersystem 51 angeordnet. Die Besetzungen des Dreheinschubs werden durch eine Zustandskontrolleinheit 52 überwacht.

Fig. 4 läßt die Führungsleiste 53 erkennen, die im Ofenbereich in die Nut 49 der Vorformlingsträger eingreift. Außerdem sind Führungsleisten 54 für die Längstransportlinie 9 (bzw. 10) zu erkennen.

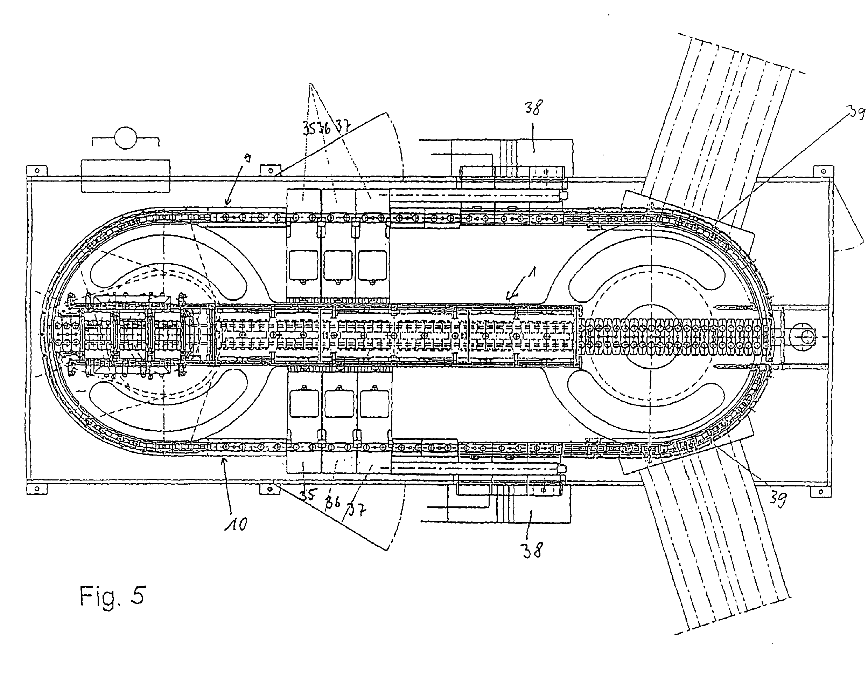

Fig. 5 zeigt eine erfindungsgemäße Doppelmaschine, die zu beiden Seiten der Ofenlinie 1 je eine Längstransportlinie 9, 10 mit zugehörigen Schließeinheiten 35, 36, 37, je eine Flaschenentnahmeeinheit 38 und je eine Vorformlingszufuhreinheit 39 aufweist.

## Patentansprüche

1. Streckblasmaschine mit einem Ofensystem mit einer Heizstrecke und einer anschließenden Temperaturausgleichsstrecke, mit einem Transportsystem, das eine Ofentransporteinrichtung aufweist, die die Vorformlingsträgereinheiten taktweise durch das Ofensystem vorrückt, mit wenigstens einer Schließeinheitengruppe, die aus n (n=1,2,3,4,5...) gleichen Schließeinheiten besteht, wobei das Ofensystem eine mit einem Linearschubsystem versehene lineare Ofenlinie (1) aufweist, auf der in einer Reihe Vorformlingsträger (2;3;4) quer angeordnet sind und mit ihren Längsseiten aneinanderliegen, und wobei ferner die Vorformlingsträger auf wenigstens einer Transportlinie in ihrer Längsrichtung angeordnet sind, und die wenigstens eine Schließeinheitengruppe (35;36;37) im Bereich eines parallel zur Ofenlinie verlaufenden Abschnitts der Transportlinie angeordnet ist,
**dadurch gekennzeichnet,**
**daß** die wenigstens eine Transportlinie (9,10) vom Ausgang der Ofenlinie (1) an einen 90°-Bogenabschnitt, anschließend einen parallel zur Ofenlinie (1) verlaufenden Abschnitt und einen weiteren 90°-Bogenabschnitt aufweist, der zum Anfang der Ofenlinie (1) zurückführt,
**daß** am Anfangs- und am Endbereich des Ofensystems zwei Drehschubsysteme angeordnet sind, die Drehtische (32,33) aufweisen, die von einem Motor angetrieben werden und synchrone Rotationsbewegungen ausführen,
wobei das am Endbereich des Ofensystems angeordnete erste Drehschubsystem je Zyklus eine Gruppe von n einzelnen Vorformlingsträgern (2,3,4) aufnimmt, auf dem Drehtisch fixiert und anschließend im synchronen Zusammenwirken mit dem zweiten Drehschubsystem als Vorformlingsträgergruppe auf der wenigstens einen Längstransportlinie der zugeordneten Schließeinheitengruppe (35,36,37) eintrifft und hier zur Durchführung des Streckblasprozesses verweilt,
und wobei das zweite Drehschubsystem gleichzeitig Vorformlingsträger (2,3,4) zum Eingangsbereich des Ofensystems vorschiebt, wo sie das Linearschubsystem (23) wieder taktweise in das Ofensystem einführt.

2. Streckblasmaschine nach Anspruch 1,
**dadurch gekennzeichnet, daß** die Ofenschiene zur Führung der Vorformlingsträger (2,3,4) einen oberen Leistenabschnitt (53) hat, der in eine mittige Nut (49) in der Vorformlingsträgerplatte (47) eingreift.

3. Streckblasmaschine nach einem der Ansprüche 1 oder 2,
**dadurch gekennzeichnet, daß** die Drehtischsysteme unterhalb der Ofenschiene angeordnet sind und mit vertikal bewegbaren Indexbolzen (50) in eine mittige Aussparung (48) der Trägerplatte (47) der Vorformlingsträger (2,3,4) eingreifen, um diese auf dem Drehtisch zu fixieren.

4. Streckblasmaschine nach einem der Ansprüche 1 bis 3,
**dadurch gekennzeichnet, daß** die wenigstens eine Längstransportlinie (9,10) durch Längsträgerschienen gebildet ist, auf denen die Vorformlingsträger (2,3,4) längs angeordnet und aneinander anliegend vorgeschoben werden.

5. Streckblasmaschine nach Anspruch 4,
**dadurch gekennzeichnet, daß** die Längsträgerschienen seitliche Führungsleisten (54) haben, die die Längsseiten der Vorformlingsträger übergreifen.

6. Streckblasmaschine nach einem der Ansprüche 1 bis 5,
**dadurch gekennzeichnet, daß** die Drehschubsysteme so ausgeführt sind, daß ihre Drehschubplatte direkt vom Läufer eines Antriebsmotors, ohne ein zwischengeschaltetes Getriebe, angetrieben wird.

7. Streckblasmaschine nach einem der Ansprüche 1 bis 6,
**dadurch gekennzeichnet, daß** als Antrieb für die Drehschubsysteme ein Direktantrieb ausgeführt mit einem Drehmomentmotor eingesetzt wird.

8. Streckblasmaschine nach einem der Ansprüche 1 bis 7,
**dadurch** gekannzeichnrt, daß beide Drehschubsysteme von einem einzigen Zentraiantrieb bewegt werden.

9. Streckblasmaschine nach einem der Ansprüche 1 bis 8,
**dadurch gekennzeichnet, daß** die Einzelpositionierbewegungen der Vorformlings-träger im Drehschubsystem hilfsweise von einem zusätzlichen, vorzugsweise pneumatisch getriebenen Kurzhubsystem durchgaführt werden.

10. Streckblasmaschine nach einem der Ansprüche 1 bis 9,
**dadurch gekennzeichnet, daß** die aus jeweils n einzelnen Vorformlingsträgern bestehende Vorformlingsträgergruppe während der Schnallhubbewegung so sortiert wird, daß sie quer angeordnet und aneinanderliegend mit einem einzigen Linearschub in das Ofensystem geschoben werden kann und die quer angeordnete und aneinander liegende, vom Ofen entnommene Gruppe während der Schnellhubbewegung so sortiert wird, daß sie als Gruppe längs angeordneter stimseitig hintereinander liegender Vorformlingsträger in die jeweilige Längstransportlinie geschoben werden.

11. Streckbtasmeschine nach einem der Ansprüche 1 bis 10
**dadurch gekennzeichnet, daß** entlang der Längstransportlinie (9,10) in Transportrichtung im Anschluß an die Schließeinheitengruppe eine Behälterentnahmeeinrichtung (38) angeordnet ist.

12. Streckblasmaschine nach einem der Ansprüche 1 bis 11,
**dadurch gekennzeichnet, daß** entlang der Längstranrportlinie (9, 10) in Transportrichtung im Anschluß an die Behälterabnahmeeinrichtung (38) eine Vorformlingszuführeinrichtung (39) angeordnet ist.

13. Streckblasmaschine nach einem der Ansprüche 1 bis 12,
**dadurch gekennzeichnet, daß** das Ofensystem aus zwei parallel angeordneten, voneinander unabhängig anzusteuernden Ofenlinien besteht, die jeweils mit eigenen Heiz- und Temperaturausgleichsstrecken ausgestattet sind.

## Claims

1. A stretch blow molding machine comprising a furnace system with a heating path and an adjoining temperature compensation path, a transport system including a furnace transport device which advances preform support units cyclically through the furnace system, at least one closing unit group consisting of n (n = 1,2,3,4,5 ...) identical closing units, the furnace system comprising a linear furnace line (1) which is provided with a linear push system and on which preform supports (2;3:4) are transversely arranged in a row and are adjacent to each other with their longitudinal sides, and the preform supports being further arranged on at least one transport line in the longitudinal direction thereof, and the at least one closing unit group (35;36;37) being arranged in the area of a transport line section extending in parallel with the furnace line,
**characterized in**
**that** the at least one transport line (9, 10), starting from the beginning of the furnace line (1), comprises a 90°-arc section, then a section extending in parallel with the furnace line (1), and a further 80°-arc section leading back to the beginning of the furnace line (1),
**that** two turn-push systems are arranged on the initial portion and on the end portion of the furnace system, said two turn-push systems comprising turntables (32, 33) which are driven by a motor and carry out synchronous rotational movements,
wherein the first turn-push system arranged on the end portion of the furnace system receives a group of n individual preform supports (2, 3, 4) each cycle, fixes it on the turntable and then, in synchronous cooperation with the second turn-push system, arrives as a preform support group at the at least one longitudinal transport line of the associated closing unit group (35, 36, 37) and remains there for carrying the stretch blow molding process,
and wherein the second turn-push system simultaneously advances preform supports (2, 3, 4) to the entry portion of the furnace system where it introduces the linear push system (23) again cyclically into the furnace system.

2. The stretch blow molding machine according to claim 1,
**characterized in that** the furnace rail for guiding the preform supports (2,3,4) has an upper strip section (53) which engages into a central groove (49) in the preform support plate (47).

3. The stretch blow molding machine according to any one of claims 1 or 2,
**characterized in that** the turntable systems are arranged below the furnace rail and engage with vertically movable index bolts (50) into a central recess (48) of the support plate (47) of the preform supports (2, 3, 4) to fix them on the turntable.

4. The stretch blow molding machine according to any one of claims 1 to 3,
**characterized in that** the at least one longitudinal transport line (9,10) is formed by longitudinal support rails on which the preform supports (2,3,4) are longitudinally arranged and advanced adjacent to each other.

5. The stretch blow molding machine according to claim 4,
**characterized in that** the longitudinal support rails have lateral guide strips (54) which grip over the longitudinal sides of the preform supports.

6. The stretch blow molding machine according to any one of claims 1 to 5,
**characterized in that** the turn-push systems are configured such that their turn-push plate is directly driven by the rotor of a drive motor without Interposition of a transmission.

7. The stretch blow molding machine according to any one of claims 1 to 8,
**characterized in that** a direct drive equipped with a torque motor is used as the drive for the turn-push system.

8. The stretch blow molding machine according to any one of claims 1 to 7,
**characterized in that** both turn-push systems are moved by a single central drive.

9. The stretch blow molding machine according to any one of claims 1 to 8,
**characterized in that** the individual positioning movements of the preform supports in the turn-push system are auxiliarily carried out by an additional, preferably pneumatically driven, short-stroke system.

10. The stretch blow molding machine according to any one of claims 1 to 9,
**characterized in that** the preform support group consisting of n individual preform supports is sorted during the fast-stroke movement such that it can be transversely arranged and pushed in adjoining fashion with a single linear push into the furnace system, and the transversely arranged and adjoining group removed from the furnace is sorted during the fast-stroke movement such that it is pushed into the respective longitudinal transport line as a group of longitudinally arranged preform supports positioned one after the other at the front side.

11. The stretch blow molding machine according to any one of claims 1 to 10,
**characterized in that** a receptacle removing device (38) is arranged along the longitudinal transport line (9, 10) in transport direction subsequent to the closing unit group.

12. The stretch blow molding machine according to any one of claims 1 to 11,
**characterized in that** a preform supply device (39) is arranged along the longitudinal transport line (8, 10) in transport direction subsequent to the receptacle removing device (38).

13. The stretch blow molding machine according to any one of claims 1 to 12,
**characterized in that** the furnace system consists of two furnace lines that are arranged in parallel and are to be controlled independently of each other, each of said lines being equipped with heating and temperature compensating paths of its own.

## Revendications

1. Machine de saufflage-étirage avec un système de four comportant une zone de chauffage et une zone d'équilibrage de température consécutive, avec un système de transport, qui comporte un dispositif de transport dans le four, par lequel les unités de support de paraison sont acheminées par cycle à travers le système de four, avec au moins un groupe d'unités de fermeture, qui est formé par n (n = 1, 2, 3, 4, 5, ...) unités de fermeture identiques, le système de four comportant une ligne de traitement au four (1) linéaire, qui est munie d'un système de poussée linéaire et sur laquelle les supports de paraison (2 ; 3 ; 4) sont agencés transversalement en une rangée et sont en contact les uns avec les autres par leurs côtés longitudinaux, et les supports de paraison étant agencés en outre dans leur sens longitudinal sur au moins une ligne de transport, et ledit au moins un groupe d'unités de fermeture (35 ; 36 ; 37) étant agencé dans la zone d'un tronçon de la ligne de transport, qui s'étend parallèlement à la ligne de traitement au four,
**caractérisée**
**en ce que** ladite au moins une ligne de transport (9, 10), depuis la sortie de la ligne de traitement au four (1), comporte à la suite d'un tronçon courbe sur 90° un tronçon parallèle à la ligne de traitement au four (1) et un autre tronçon courbe sur 90° qui retourne vers le début de la ligne de traitement au four (1),
**en ce que** dans la zone d'entrée et de sortie du système de four sont agencés deux systèmes de poussée rotatifs, qui comportent des tables rotatives (32, 33), qui sont actionnées par un moteur et effectuent des mouvements de rotation synchrones,
le système de poussée rotatif, agencé dans la zone de sortie du système de four, recevant dans chaque cycle un groupe de n supports de paraison (2, 3, 4) séparés, le fixe sur la table rotative et parvient ensuite en coopération synchrone avec le deuxième système de poussée rotatif formant un groupe de supports de paraison sur ladite au moins une ligne de transport longitudinale du groupe d'unités de fermeture (35, 36, 37) associé et séjourne ici jusqu'à la mise en oeuvre du processus de soufflage-étirage,
et le deuxième système de poussée rotatif faisant avancer simultanément des supports de paraison (2, 3, 4) vers la zone d'entrée du système de four, dans laquelle le système de poussée linéaire (23) l'introduit à nouveau par cycle dans le système de four.

2. Machine de soufflage-étirage selon la revendication 1, **caractérisée en ce que** le rail du four destiné à guider les supports de paraison (2, 3, 4) comporte un tronçon de baguette (53) supérieur, qui entre en prise dans une rainure centrale (49) ménagée dans le plateau de fixation (47) des supports de paraison.

3. Machine de soufflage-étirage selon la revendication 1 ou 2, **caractérisée en ce que** les systèmes de tables rotatives sont agencés en dessous du rail du four et s'engagent avec des tenons de repérage (50), mobiles verticalement, dans un évidement (48) central du plateau de fixation (47) des supports de paraison (2, 3, 4) afin de fixer ceux-ci sur la table rotative.

4. Machine de soufflage-étirage selon l'une quelconque des revendications 1 à 3, **caractérisée en ce que** ladite au moins une ligne de transport longitudinale (9, 10) est formée par des rails de support longitudinaux, sur lesquels les supports de paraison (3, 4, 5) sont agencés dans le sens longitudinal et sont poussés vers l'avant en étant en contact les uns avec les autres.

5. Machine de soufflage-étirage selon la revendication 4, **caractérisée en ce que** les rails de support longitudinaux comportent des baguettes de guidage (54) latérales, qui s'engagent au-dessus des côtés longitudinaux des supports de paraison.

6. Machine de soufflage-étirage selon l'une quelconque des revendications 1 à 5, **caractérisée en ce que** les systèmes de poussée rotatifs sont conçus de telle sorte que leur plaque de poussée rotative est actionnée directement par le rotor d'un moteur d'entraînement sans engrenage intercalé.

7. Machine de soufflage-étirage selon l'une quelconque des revendications 1 à 6, **caractérisée en ce que** pour l'entraînement des systèmes de poussée rotatifs, on utilise un entraînement direct, réalisé avec un moteur couple.

8. Machine de soufflage-étirage selon l'une quelconque des revendications 1 à 7, **caractérisée en ce que** les deux systèmes de poussée rotatifs sont actionnés par un seul entraînement central.

9. Machine de soufflage-étirage selon l'une quelconque des revendications 1 à 8, **caractérisée en ce que** les mouvements de positionnement individuels des supports de paraison dans le système de poussée rotatif sont effectués par un système de levage à faible course supplémentaire, actionné de préférence par voie pneumatique.

10. Machine de soufflage-étirage selon l'une quelconque des revendications 1 à 9,
**caractérisée en ce que** le groupe de supports de paraison, formé respectivement par n supports de paraison individuels, est trié pendant le mouvement de levage rapide, de telle sorte qu'il peut être poussé dans le système de four par une seule poussée linéaire sous forme de groupe avec des supports agencés transversalement et en appui les uns contre les autres, et le groupe, sortant du four avec les supports agencés transversalement et en appui les uns contre les autres, est trié pendant le mouvement de levage rapide de telle sorte qu'il est poussé dans la ligne de transport longitudinale correspondante, sous forme de groupe de supports de paraison, agencés longitudinalement les uns derrière les autres par leurs faces frontales.

11. Machine de soufflage-étirage selon l'une quelconque des revendications 1 à 10, **caractérisée en ce qu'**un dispositif de prélèvement des récipients (38) est agencé le long de la ligne de transport longitudinale (9, 10), dans le sens de transport à la suite du groupe des unités de fermeture.

12. Machine de soufflage-étirage selon l'une quelconque des revendications 1 à 11, **caractérisée en ce qu'**un dispositif d'admission des paraisons (39) est agencé le long de la ligne de transport longitudinale (9, 10), dans le sens de transport à la suite du dispositif de prélèvement des récipients (38).

13. Machine de soufflage-étirage selon l'une quelconque des revendications 1 à 12,
**caractérisée en ce que** le système de four est formé par deux lignes de traitement au four, qui sont agencées parallèlement et sont destinées à être commandées indépendamment l'une de l'autre et qui sont équipées chacune d'une zone de chauffage et d'une zone d'équilibrage de la température.
